# EUROPÄISCHE PATENTSCHRIFT

(11) **EP 1 317 982 B1**
(45) Veröffentlichungstag und Bekanntmachung des Hinweises auf die Patenterteilung: **27.04.2005**
(21) Anmeldenummer: 02014294.9
(22) Anmeldetag: 27.06.2002
(51) Int. Cl.: B23D 43/02, B23F 21/26

(54) **Innen-Räumwerkzeug**
Internal broaching tool
Outil de brochage interne

(30) Priorität: 05.12.2001 DE 10159532
(43) Veröffentlichungstag der Anmeldung: 11.06.2003
(73) Patentinhaber: Forst Technologie GmbH & Co. KG, 42859 Solingen (DE)
(72) Erfinder: Berktold, Andreas, Dr., 41460 Neuss (DE); Weghaus, Norbert, 51399 Burscheid (DE)
(74) Vertreter: Rau, Manfred, Dr. Dipl.-Ing.

(56) Entgegenhaltungen:
- US-A- 2 683 919
- US-A- 2 898 670
- PATENT ABSTRACTS OF JAPAN vol. 1998, no. 01, 30. Januar 1998 (1998-01-30) -& JP 09 234627 A (MITSUBISHI HEAVY IND LTD), 9. September 1997 (1997-09-09)

## Beschreibung

Die Erfindung betrifft ein Innen-Räumwerkzeug zum Innen-Räumen von jeweils durch einen Profilgrund und Profilflanken begrenzten Profilen, insbesondere von Innenverzahnungen, in einem Werkstück gemäß dem Oberbegriff des Anspruchs 1 (siehe z.Bsp. US 2898670).

Die zum Innen-Räumen von Profilen üblicherweise eingesetzten Innen-Räumwerkzeuge sind aus DIN 1415 (Ausgabe 1973), Blatt 1, Seite 2 bekannt. Sie weisen einen Schaft, einen Zahnungsteil und ein Endstück auf. Der Schaft wird von einem Schafthalter einer Räummaschine gehalten, welcher das Räumwerkzeug durch ein in der Räummaschine gehaltenes Werkstück zieht und hierbei die Profile räumt. Das Endstück wird nach dem Räumvorgang von einem Endstückhalter der Räummaschine ergriffen, der das Räumwerkzeug nach dem Räumvorgang in seine Ausgangsposition zurücktransportiert. Der Zahnungsteil weist entgegen der Räumrichtung hintereinander mehrere Reihen von Räumzähnen auf, und zwar in der Regel eine große Zahl solcher Reihen von Räumzähnen. Die Räumzähne weisen Profilgrund-Schneiden zum Schneiden des Profilgrundes eines Profils und Profilflanken-Schneiden zum Schneiden der Profilflanken des Profils auf. Die zum Schneiden eines Profils dienenden, entgegen der Räumrichtung hintereinander angeordneten und insoweit einander zugeordneten Räumzähne weisen eine Tiefenstaffelung, d. h. eine Durchmessersteigung auf, sodass alle zum Schneiden eines Profils dienenden Räumzähne nacheinander einen zur Erzeugung des Profilgrundes dienenden Span schneiden.

Da die Profilgrund-Schneiden die Hauptspanungsleistung erbringen, werden sie auch als Hauptschneiden bezeichnet. Soweit es um das Schneiden der Profilflanken des Profils geht, weisen die entgegen der Räumrichtung hintereinander angeordneten Räumzähne Profilflanken-Schneiden mit einem Profilgefälle auf, wie es in DIN 1415 (Ausgabe 1973), Blatt 1, Seite 3, Bild 11 dargestellt ist. Die Profilflanken-Schneiden werden auch als Nebenschneiden bezeichnet. Das Profügefälle wird dadurch erzeugt, dass die Profilflanken-Schneiden eines nachfolgenden Räumzahns bezogen auf die Profilflanken-Schneiden eines voreilenden Räumzahns mit einer seitlichen Freilage versehen werden, sodass der nachfolgende Räumzahn nur in dem durch die Durchmessersteigung bzw. Tiefenstaffelung vorgesehenen Bereich mit seinen Profilflanken-Schneiden schneidet, während er in dem Bereich, in dem der voreilende Räumzahn mit seinen Profilflanken-Schneiden geschnitten hat, nicht zum Eingriff am Werkstück kommt. Hierdurch wird ein Klemmen der Räumzähne im Bereich der Profilflanken während des Räumvorganges verhindert. Die Profilflanken erhalten hierdurch eine treppenförmige Oberflächenstruktur.

Die mit dem bekannten und üblichen Innenräumwerkzeug erzeugten Profile weisen für normale Anwendungs- bzw. Bedarfsfälle eine ausreichende Oberflächengüte, Profilformgenauigkeit und Profilliniengenauigkeit auf. Während des Räumvorganges kann eine Verlagerung der Achse des Räumwerkzeuges stattfinden, sodass die nacheinander zum Eingriff kommenden Räumzähne jeweils eine unterschiedliche Mittenlage relativ zum zu räumenden Werkstück haben. Insbesondere beim Drallräumen (Schraubräumen) kann einer solchen Verlagerung der Achse des Räumwerkzeuges ein Torsionsfehler überlagert werden, welcher durch rotatorische Kräfte beim Drallräumen hervorgerufen wird. Die Profilgenauigkeit und die Oberflächengüte der Profilflanken sind hierbei oft nicht ausreichend, wenngleich die Flankenliniengenauigkeit in der Regel zufriedenstellend ist. Insbesondere bei Laufverzahnungen, z. B. innenverzahnten Zahnrädern mit einer Gerad- oder Schräg-Verzahnung, werden hohe Profilformgenauigkeiten und Flankenliniengenauigkeiten gefordert.

Um die geschilderten Mängel bei entsprechend hohen Anforderungen zu beseitigen, ist es bekannt, den mit Profilgefälle ausgestalteten Räumzähnen - bezogen auf die Räumrichtung - am Räumwerkzeug noch einen Kalibrierbereich nachzuordnen. Ein solcher Kalibrierbereich besteht aus mehreren hintereinander angeordneten Räumzähnen gleicher Höhe, die also den Profilgrund nicht nachschneiden. Sie weisen jedoch entgegen der Räumrichtung größer werdende Zahndicken auf, d. h. alle Kalibrier-Räumzähne schneiden über die volle Flankenhöhe der Profilflanke einen Span, dessen Spandicke im allgemeinen 10 bis 20 µm beträgt. Die Kalibrier-Räumzähne müssen an jeder Profilflanken-Schneide mit einem Freischliff, d. h. einem Freiwinkel, versehen sein. Sie weisen also einen Hinterschliff auf. Durch das Kalibrierräumen wird eine gute Profilformgenauigkeit und eine hohe Oberflächengüte erreicht. Hinsichtlich der Flankenliniengenauigkeit tritt im Verhältnis zum zuvor in Tiefenstaffelung geräumten Profil eine Verschlechterung ein. Dies ergibt sich daraus, dass die hinterschliffenen Profilflanken-Schneiden der Kalibrierräumzähne scharfe Schneiden sind, deren Eigenführungsverhalten relativ schlecht ist.

Beim Wechsel vom tiefengestaffelten Räumen zum Vollformkalibrieren tritt systembedingt eine Räumkraftunterbrechung auf, die insbesondere beim Drallräumen zu erheblichen Nachteilen führt. Hierbei führt eine Entlastung der entgegen der Räumrichtung wirkenden Hauptschnittkraft auch zu einer Reduktion der Torsionsspannung, d. h. die relative Torsion zwischen Werkstück und Innen-Räumwerkzeug verändert sich. Diese Veränderung kann so stark sein, daß der Vollformkalibrierschneidteil nicht richtig in die mit Tiefenstaffelung geräumten Profile eingeführt wird und deshalb derart einseitig die Profilflanken anschneidet, daß das Profil nicht an seinen beiden Profilflanken kalibriert wird. Aufgrund der geschilderten Mängel des beim tiefengestaffelten Räumen erzeugten Profils schneiden die Profilflanken-Schneiden der Kalibrier-Räumzähne ungleichmäßig in die treppenförmig ausgebildeten Profilflanken, wodurch wiederum Torsionsschwingungen entstehen, die sich negativ auf die Profilliniengenauigkeit auswirken können.

Aus der US 2,986,801 ist ein Innen-Räumwerkzeug zum Innenräumen von jeweils durch einen Profilgrund und Profilflanken begrenzten Innenverzahnungen in einem Werkstück bekannt. Die Profilgrund-Schneiden hintereinander angeordneter und einander zugeordneter Räumzähne weisen eine positive Durchmessersteigung gegenüber den in Räumrichtung jeweils voreilenden Räumzähnen auf. Die Profilflanken-Schneiden hintereinander angeordneter und einander zugeordneter Räumzähne weisen über ihre volle Profilhöhe eine negative Profilsteigung auf. Dies heißt, daß hintereinander angeordnete Räumzähne bei zunehmendem Durchmesser jeweils schmalere Profile aufweisen. Die sich daraus ergebenden Nachteile entsprechen den oben zu DIN 1415 (Ausgabe 1973) beschriebenen Nachteilen.

In der US 2,898,670 A wird das gleiche Problem, nämlich das Verlaufen des Werkzeugs in Tangentialrichtung beim Räumen gelöst. Hierzu wird eine mehrstufige Ausgestaltung des Räumwerkzeugs vorgesehen. Zuerst wird in zwei völlig unterschiedlichen Arbeitsschritten ein Teil-Profil geräumt, das beispielsweise der halben Profiltiefe des insgesamt zu räumenden Profils entspricht. Anschließend wird in einem dritten Arbeitsschritt durch Profilräumen das Werkstück auf die endgültige Tiefe des zu räumenden Profils geräumt, d. h. sowohl die Profilgrund-Schneiden als auch die benachbart zu den Profilgrund-Schneiden befindlichen, als Profilflanken-Schneiden ausgebildeten Seitenkanten sind im Schneideinsatz; das Räumwerkzeug wird im zuvor geräumten Teil-Profilbereich geführt. Zum Räumen eines ersten Teil-Bereichs werden Räumzähne eingesetzt, die einen flachen Kanal in das Werkstück räumen.

Aufgrund der auftretenden Torsionskräfte verläuft das Räumwerkzeug so, dass am Ende eine Profilflanke erzeugt wird, die etwa über der halben Profiltiefe des zu erzeugenden Profils eine Profilflanke aufweist, die den gewünschten Verlauf haben soll. Erreicht wird dies dadurch, dass der Verlauf des Räumwerkzeugs in Tangentialrichtung in Kauf genommen wird. Anschließend werden bei einer dem Stand der Technik zugehörigen Ausführungsform Nachschneideräumzähne eingesetzt, die auf der der bisher geschnittenen Teil-Profilflanke zugewandten Seite eine Stützfläche aufweisen. Die Profügrundkante hat jeweils Spiel gegenüber dem bereits erzeugten Profilgrund, wird dort also nicht abgestützt und schneidet dort nicht. Mit den stufenförmig zurückgesetzten Zahnabschnitten wird dann der Profilgrund geschnitten, wobei gleichzeitig wohl auch die andere Profilflanke abschnittsweise mit geräumt wird.

Aus US 2,683,919 ist eine ähnliche Ausgestaltung bekannt.

Aus der EP 0 739 674 A (entsprechend US-A-5,865,569) ist es zur Beseitigung der vorstehend geschilderten Nachteile bei einem Innen-Räumwerkzeug der gattungsgemäßen Art bekannt geworden, eine höhere Oberflächengüte, Profilformgenauigkeit und Flankenliniengenauigkeit dadurch zu erreichen, daß die Profilflanken-Schneiden hintereinander angeordneter und einander zugeordneter Räumzähne über ihre volle Profilhöhe eine Profilsteigung aufweisen, die bezogen auf die Durchmesser-Steigung der Profilgrund-Schneiden klein ist. Bei dieser bekannten Ausgestaltung muß der Spankammer-Grund der Räumzähne auf jeden Fall unter dem Profilsteg, das heißt unter dem Kopfkreis des zu erzeugenden Profils liegen, da alle Profilflanken-Schneiden ihre untere Begrenzung am Profilsteg haben. Dies führt bei großen Höhen der zu erzeugenden Profile zu großen Zahn-Teilungen mit der Konsequenz, dass bei einer vorgegebenen Zahl von Räumzähnen das Räumwerkzeug zu lang wird. Wenn dagegen die ZahnTeilung trotz einer zu großen Höhe des zu erzeugenden Profils klein gemacht wird, kann dies zu Problemen beim Schleifen führen. In bestimmten Größenbereichen der Profile wird daher die Nutzung der Vorteile der gattungsgemäßen Ausgestaltung eingeschränkt. Der Einsatz dieser Räumwerkzeuge erfordert insbesondere beim Drallräumen Räummaschinen mit hoher Steifigkeit und exaktem Drallantrieb.

Der Erfindung liegt die Aufgabe zugrunde, ein Innen-Räumwerkzeug der gattungsgemäßen Art so auszugestalten, dass das tatsächlich erzeugte Profil exakt dem Soll-Profil entspricht.

Diese Aufgabe wird erfindungsgemäß durch die Merkmale im Kennzeichnungsteil des Anspruches 1 gelöst. Bei dem erfmdungsgemäßen Innen-Räumwerkzeug erfolgt auf einer Seite der Räumwerkzeugzähne ausschließlich eine Führung, d.h. es wird kein Profilflanken-Span geschnitten. Jedoch erfolgt eine Formung des an der Profilgrund-Schneide, also der Hauptschneide, geschnittenen Spans auch im Bereich der Führungs-Kante, soweit diese sich über die Profilsteigung erstreckt. Auf der gegenüberliegenden zu erzeugenden Profilflanke kann dagegen ein Span geschnitten werden. Entscheidend ist, dass das Räumwerkzeug immer in einer Richtung mit seinen Führungs-Flanken gegen die bereits die endgültige Form aufweisenden Profilflanken gedrückt wird. Eine auf jeden Fall nur geringe Profilflankensteigung der Profilflanken-Schneiden kann sinnvoll sein, damit Druck auf die Führungs-Flanke ausgeübt wird. Beim Drallräumen, bei dem die Führungsflanke die - bezogen auf die Drallrichtung - nacheilende Flanke, die sogenannte Druckflanke, ist, kommt dem keine nennenswerte Bedeutung zu. Durch die Schneidfähigkeit der Profilflanken-Schneiden wird ein Klemmen des Räumwerkzeugs verhindert. Die geschilderten nachteiligen Effekte treten nicht auf. Die Profilflanke, an der der jeweilige Räumzahn geführt wird, hat nach Beendigung des Räumvorganges bereits ihre gewünschte endgültige Qualität, während bei zahlreichen Ausgestaltungen die andere Profilflanke noch nachkalibriert werden muß.

Vorteilhafte Ausgestaltungen ergeben sich aus den Unteransprüchen.

Weitere Merkmale, Vorteile und Einzelheiten der Erfindung ergeben sich aus der nachfolgenden Beschreibung anhand der Zeichnung. Es zeigt
- Fig. 1: ein Innen-Räumwerkzeug,
- Fig. 2: ein mit Profilen in Form einer Innenverzahnung versehenes Werkstück,
- Fig. 3: einen Teil-Querschnitt durch ein erstes Ausführungsbeispiel eines Räumwerkzeuges im Eingriff in das Werkstück,
- Fig. 4: einen Teil-Längsschnitt durch das erste Ausführungsbeispiel,
- Fig. 5: einen Teil-Querschnitt durch das erste Ausführungsbeispiel entsprechend der Schnittlinie V-V in Fig. 4,
- Fig. 6: einen Teil-Querschnitt durch ein zweites Ausführungsbeispiel eines Räumwerkzeuges im Eingriff in das Werkstück,
- Fig. 7: einen Teil-Längsschnitt durch das zweite Ausführungsbeispiel,
- Fig. 8: einen Teil-Querschnitt durch das zweite Ausführungsbeispiel entsprechend der Schnittlinie VIII-VIII in Fig. 7,
- Fig. 9: einen Teil-Querschnitt durch ein drittes Ausführungbeispiel eines Räumwerkzeuges im Eingriff in das Werkstück,
- Fig. 10: einen Teil-Längsschnitt durch das dritte Ausführungsbeispiel,
- Fig. 11: einen Teil-Querschnitt durch das dritte Ausführungsbeispiel entsprechend der Schnittlinie XI-XI in Fig. 10,
- Fig. 12 bis 15: zwei abgewandelte Ausführungsformen des ersten Ausführungsbeispiels.

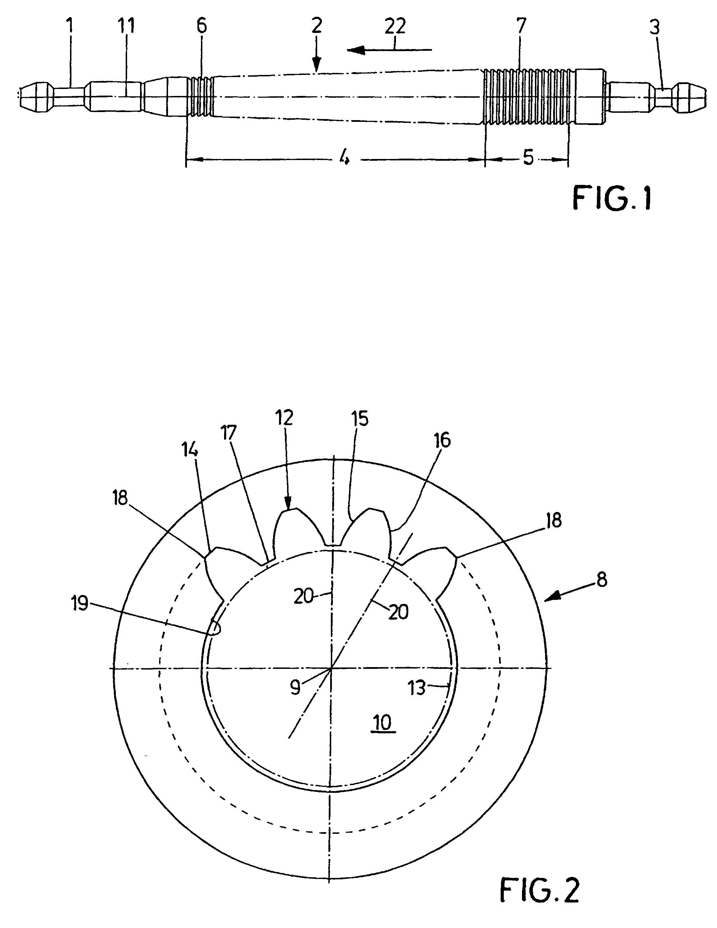

Das in Fig. 1 dargestellte und in seinem Grund-Aufbau bekannte Innen-Räumwerkzeug weist einen Schaft 1, einen Zahnungsteil 2 und hieran anschließend ein Endstück 3 auf. Der Zahnungsteil 2 besteht wiederum aus einem dem Schaft 1 folgenden Vor-Räumteil 4 und einem sich anschließenden, dem Endstück 3 vorgeordneten Kalibrier-Räumteil 5. Der Räumteil 4 weist zahlreiche Reihen 6 von weiter unten noch zu erläuternden Räumzähnen auf. Der Kalibier-Räumteil 5 weist ebenfalls eine Reihe von Reihen 7 von Kalibrierzähnen auf.

Mit dem Räumwerkzeug wird ein beispielsweise ringförmiges Werkstück 8 bearbeitet, das in Fig. 2 dargestellt ist. Dieses weist bereits vor dem Räumen eine zur Mittel-Längs-Achse 9 des fertig bearbeiteten Werkstücks 8 konzentrische Bohrung 10 auf. Das Werkstück 8 wird auf eine Werkstückvorlage einer Innen-Räummaschine gelegt; anschließend wird der Schaft 1 des Räumwerkzeugs durch die Bohrung 10 geführt und von einem Schafthalter der Räummaschine ergriffen, der in Richtung der Achse 11 des Räumwerkzeugs antreibbar ist und das Räumwerkzeug durch das Werkstück 8 zieht. Hierbei werden Profile 12, beispielsweise eine Innenverzahnung, in den Innenumfang 13 des Werkstücks 8 geräumt. Das Innen-Räumwerkzeug wird hierbei nicht zwangsgeführt; es tritt eine Eigenführung bzw. Eigenzentrierung zwischen Werkstück 8 und Räumwerkzeug ein, d.h. die Achse 11 des Räumwerkzeugs und die Achse 9 des Werkstücks 8 sollen grundsätzlich zusammenfallen. Das Endstück 3 dient primär zum Rücktransport des Innen-Räumwerkzeugs nach einem Räumhub. Das Räumwerkzeug kann nicht nur auf Zieh-Räummaschinen, sondern auch auf sogenannten Hebetisch-Räummaschinen und auf Druck-Räummaschinen eingesetzt werden.

Die zu räumenden Profile 12 weisen einen Profilgrund 14, zwei einander gegenüberliegende Profilflanken 15, 16 und einen Profilsteg 17 auf, der die einander benachbarten Profilflanken 15, 16 zweier einander benachbarter Profile 12 miteinander verbindet. Die Profilflanken 15, 16 eines Profils 12 bilden mit dem Profilgrund 14 eine Ecke 18. Beim Räumen der Profile 12 kann die Bohrung 10 zu einer durch die Profilstege 17 begrenzten Ausnehmung 19 aufgeweitet werden. Das Räumen des Werkstücks 8 im Bereich der zu erzeugenden Profilstege 17 wird nachfolgend nicht erläutert, da es für das Verständnis der Erfindung ohne Bedeutung ist. Es wird nachfolgend das Räumen eines Profils 12 beschrieben, das zwischen zwei Radien 20 durch die Achse 9 angeordnet ist, die jeweils an das Profil 12 anschließende Profilstege 17 halbieren.

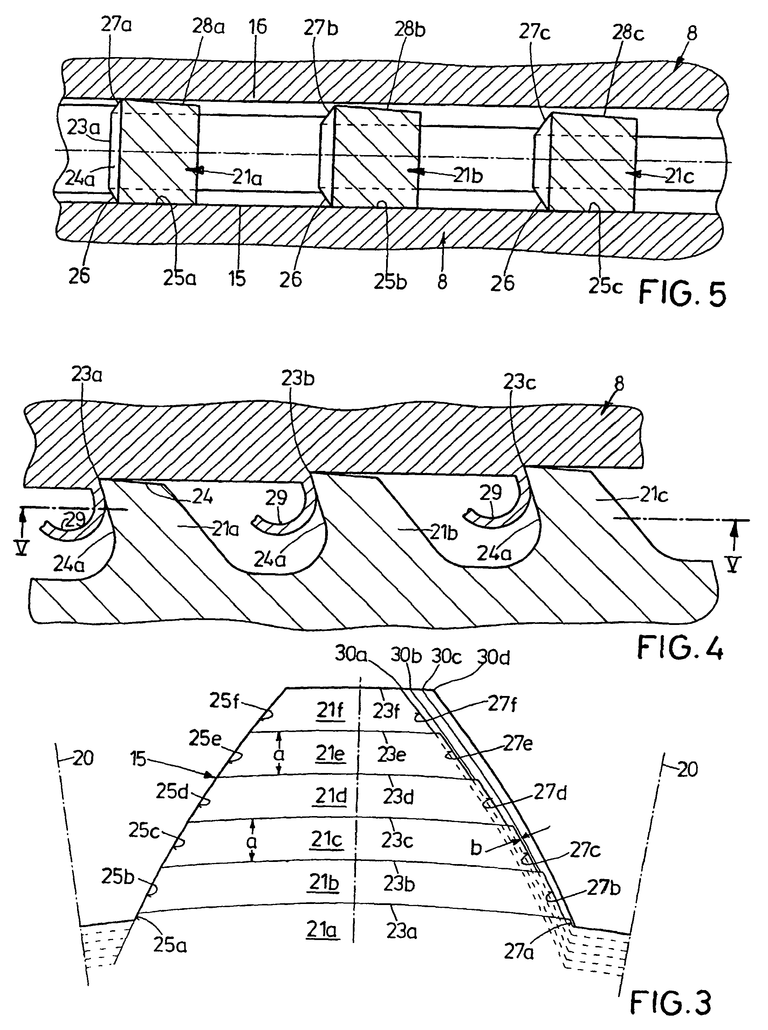

Ein erstes erfindungsgemäßes Ausführungsbeispiel eines Innen-Räumwerkzeugs nach den Fig. 3 bis 5 weist Räumzähne 21 auf, von denen ein erster Räumzahn mit 21a, weitere Räumzähne mit 21b, 21c, 21d, 21e und ein letzter Räumzahn mit 21 f bezeichnet sind. Auch wenn insgesamt nur sechs Räumzähne 21 dargestellt sind, sind an einem praxisgemäßen Räumwerkzeug mindestens - abhängig von der zu erzeugenden Profiltiefe - die fünf- bis zwanzigfache Zahl von Räumzähnen im Räumteil 4 vorhanden. Die Räumzähne 2 1 a bis 21 f sind am Räumwerkzeug entgegen der Räumrichtung 22 angeordnet. Die Räumzähne 21a bis 21f weisen jeweils eine in der Praxis auch als Hauptschneide bezeichnete Profilgrund-Schneide 23a bis 23f auf, die einen Verlauf entsprechend einem zur Achse 11 konzentrischen Kreis aufweist. Die Profilgrund-Schneiden 23a bis 23f sind in üblicher Weise mit einem Freischliff, d.h. einem Freiwinkel, versehen. Sie weisen also eine Profilgrund-Schneiden-Freifläche 24 und eine Spanfläche 24a auf, wie aus Fig. 4 und 5 ersichtlich ist.

Die den zu erzeugenden Profilflanken 15, 16 des Werkstücks 8 zugeordneten Seitenflächen der Räumzähne 21 sind unterschiedlich ausgestaltet. Die einer - in Fig. 3 links dargestellten - Profilflanke 15 zugeordneten Seitenflächen der Räumzähne 21a bis 21f sind reine Führungs-Flanken 25a bis 25f. Ihr Verlauf entspricht also über der vollen Profilflankenhöhe dem Verlauf der zu erzeugenden Profilflanke 15. Sie weisen also keinen Freischliff bzw. Freiwinkel auf, sind also nicht als Freifläche ausgebildet, wie Fig. 5 entnehmbar ist, und weisen auch keine Freilage auf, wie ebenfalls Fig. 5 entnehmbar ist. Die Profilsteigung a liegt im Bereich von 10 bis 80 µm. Die Führungs-Kante 26 zwischen der jeweiligen Führungs-Flanke 25 und der Spanfläche 24a ist also eine nichtschneidende, d.h. nichtschneidfähige Kante 26.

Die gegenüberliegende, der zu erzeugenden Profilflanke 16 zugeordnete, in Fig. 3 rechts dargestellte Kante ist dagegen - zumindest im Bereich der jeweiligen Profilsteigung a - eine schneidfähige Kante, also eine Profilflanken-Schneide 27a bis 27f. Der Räumzahn 21a bis 21f weist also zugeordnet zu der Profilflanken-Schneide 27a bis 27f eine durch einen Freiwinkel bzw. einen Freischliff gebildete Profilflanken-Freifläche 28a bis 28 f auf, wie aus Fig. 5 hervorgeht. Bei dem Ausführungsbeispiel nach Fig. 3 bis 5 ist die Profilflanken-Steigung b negativ, d.h. die Profilflanken-Schneiden 27a bis 27f sind mit zunehmender Profiltiefe gegenüber der endgültig zu räumenden Profilflanke 16 zurückversetzt. Es gilt: -2 µm ≤ b < 0.

Wie Fig. 4 entnehmbar ist, wo nur drei Räumzähne 21a, 21 b und 2 1 c dargestellt sind, wird mit der jeweiligen Profilgrund-Schneide 23a bis 23c ein der Profilsteigung a entsprechender Span 29 beim Räumen geschnitten. Wie Fig. 5 entnehmbar ist, liegen die Führungs-Flanken 25a bis 25c mit der jeweiligen Führungs-Kante 26 über ihre volle Länge ohne jede Profilflankensteigung an der zu erzeugenden Profilflanke 15 an. Im Bereich der Profilsteigung a wird der Span 29 und damit auch die Profilflanke 15 geformt. Da die Profilflanken-Steigung b bei dem Ausführungsbeispiel nach den Fig. 3 bis 5 negativ ist, liegen die Profilflanken-Schneiden 27 b und 27c jeweils nicht mehr an der zu erzeugenden Profilflanke 16 an, d.h. sie schneiden nicht die endgültige Profilflanke 16. Diese Ausgestaltung ist besonders geeignet für ein Drall-Räumwerkzeug, dessen Führungs-Flankenbezogen auf die Drallrichtung - nacheilend sind, sodass ein zusätzlicher Druck über die Profilflanken-Schneiden nicht auf die Führungs-Flanken ausgeübt werden muß. In diesem Fall drücken also primär die Torsionskräfte den jeweiligen Räumzahn 21 a bis 21 f gegen die zu erzeugende Profilflanke 15, sodass an dieser eine saubere Führung sichergestellt ist, wodurch wiederum sichergestellt ist, dass die erzeugte Profilflanke 15 dem Soll-Profil entspricht. An dem der jeweiligen wirksamen Profilsteigung a zugehörigen Abschnitt der Profilflanken-Schneiden 27a bis 27f wird jeweils der Span 29 geformt.

Am Ende des Räumvorgangs mit dem Räumteil 4 ist die endgültige Profilflanke 15 bereits geschnitten, während die Profilflanke 16 des Profils 12 noch nicht fertig geschnitten ist. Dies erfolgt dann mittels des Kalibrier-Räumteils 5 mit insoweit nur einseitig schneidenden Kalibrier-Räumzähnen 30a bis 30d.

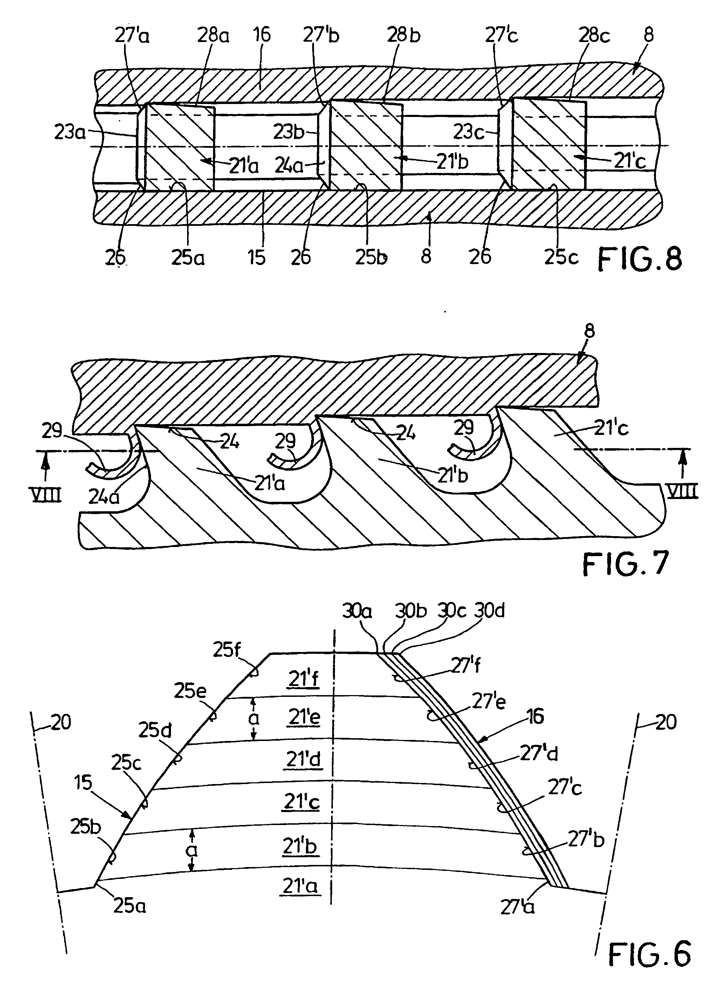

Für das zweite Ausführungsbeispiel nach den Fig. 6 bis 8 werden für identische Teile identische Bezugsziffem wie beim zuvor beschriebenen Ausführungsbeispiel verwendet. Soweit die Teile funktionell gleich aber konstruktiv unterschiedlich sind, werden dieselben Bezugsziffern mit einem hochgesetzten Strich verwendet.

Dieses zweite Ausführungsbeispiel unterscheidet sich von dem zuvor geschilderten durch den Verlauf der Profilflanken-Schneiden 27'a bis 27'f der Räumzähne 21'a bis 21'f. Sie sind vollprofilschneidend ausgebildet, und haben keine Profilflanken-Steigung; die Profilflanken-Steigung ist also Null. Die Profilflanken-Schneiden 27'a bis 27'b formen den Span 29 und die Profilflanke 16 jeweils über den Bereich einer Profilsteigung a. Der Verlauf der Profilflanken-Schneiden 27'a bis 27'f ist jeweils exakt parallel zum Verlauf der Profilflanke 16. Hierbei erfolgt das Kalibrier-Räumen mittels der Kalibrier-Räumzähne 30a bis 30d über die volle Profiltiefe.

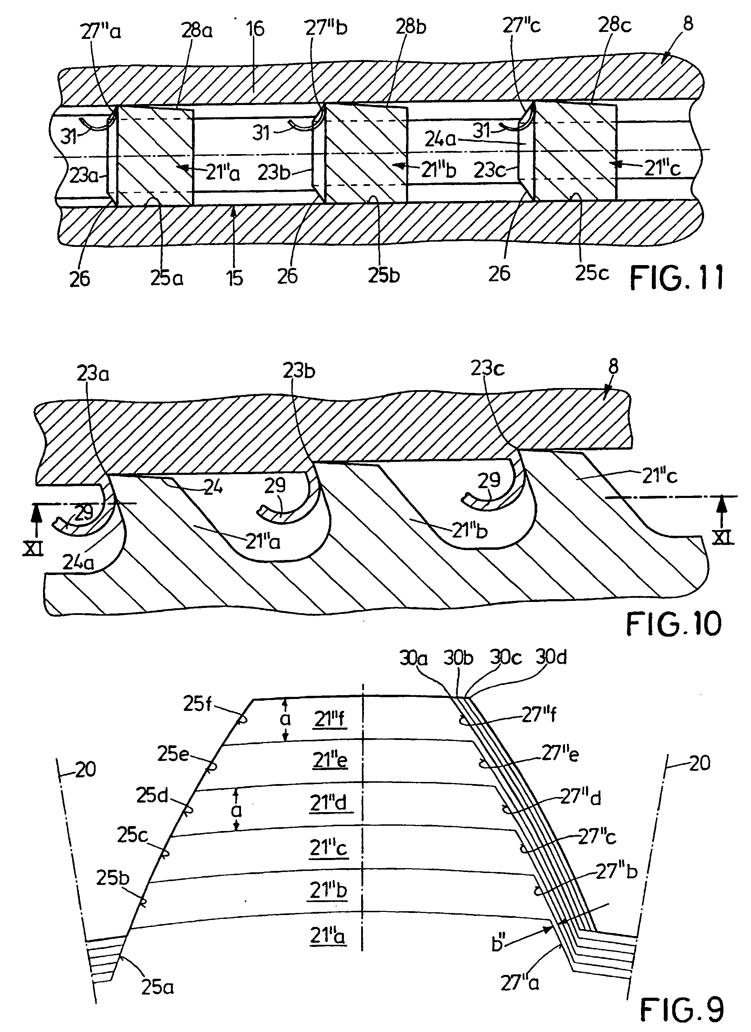

Bei dem dritten Ausführungsbeispiel nach den Fig. 9 bis 11 werden wiederum mit den zuvor geschilderten Ausführungsbeispielen identische Teile mit identischen Bezugsziffern versehen, während funktionell gleiche aber konstruktiv anders gestaltete Teile mit denselben Bezugsziffern mit einem hochgesetzten Doppelstrich bezeichnet werden. Hierbei sind die Profilflanken-Schneiden 27"a bis 27"f als vollprofilschneidende Schneiden ausgebildet. In diesem Fall weisen die aufeinanderfolgenden Räumzähne 21 "a bis 21 "f eine positive Profilflanken-Steigung b" auf, für die gilt: 0 < b' ≤ 2 µm. Die Profilflanken-Schneiden 27"a bis 27"f schneiden jeweils einen Span 31 über die jeweils erreichte Profiltiefe. Auch hier erfolgt anschließend ein Kalibrier-Räumen dieser Profilflanke 16, was aber nicht zwingend erforderlich ist. Das Vollprofil-Flankenschneiden, wie es für die Profilflanke 16 im Ausführungsbeispiel nach den Fig. 9 bis 11 dargestellt ist, ist für das gleichzeitige Schneiden beider Profilflanken aus der EP 0 937 674 B 1 (entspr. US 5,865,569) bekannt.

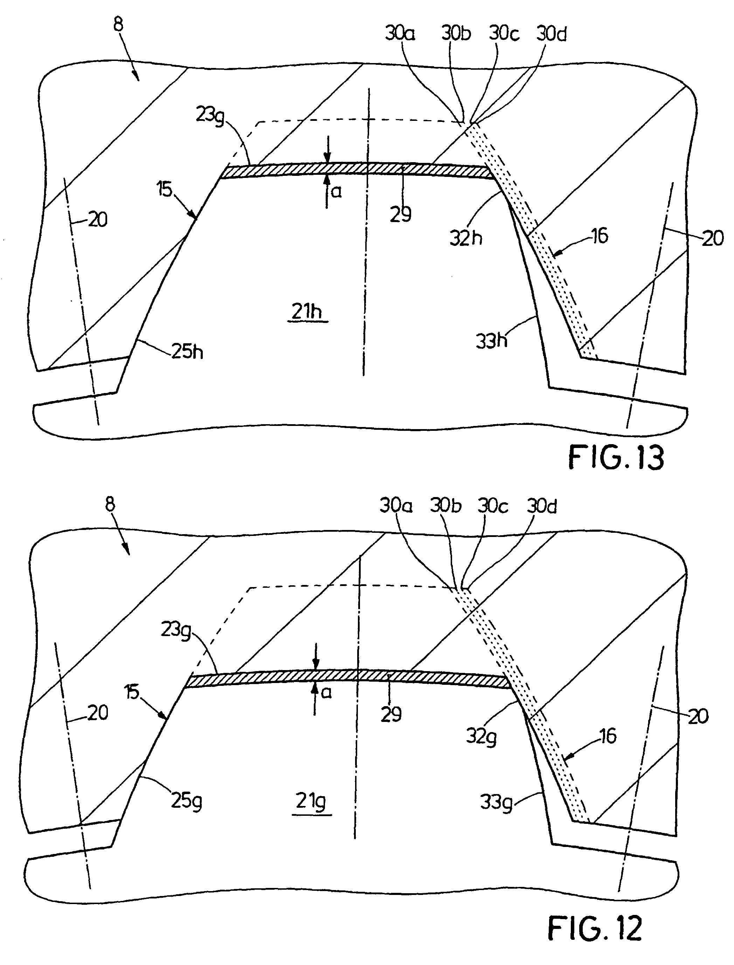

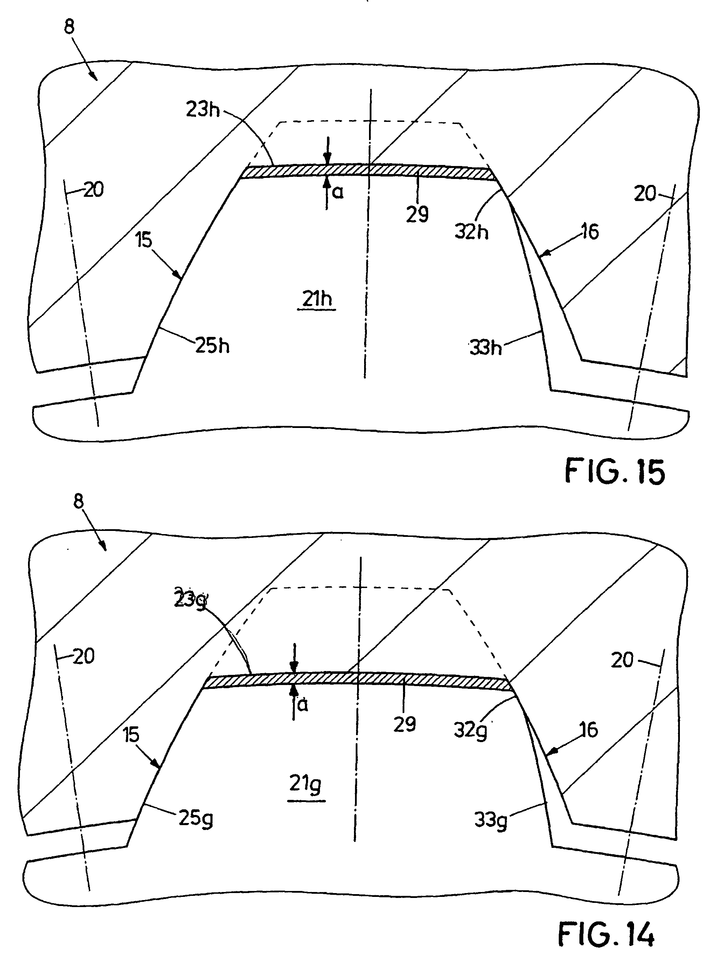

In den Fig. 12 und 13 einerseits und Fig. 14 und 15 andererseits sind jeweils zwei Räumzähne 21g und 21h dargestellt, bei denen die Profilsteigung a verhältnismäßig realitätsbezogen dargestellt ist. Die Dicke a des mit der jeweiligen Profilgrund-Schneide 23g bzw. 23h zu schneidenden Spans 29 ergibt sich aus dem dicht schraffierten entsprechenden Bereich. Auch hier liegt die Führungs-Flanke 25g bzw. 25h vollflächig an der zu erzeugenden Profilflanke 15 an.

In den Fig. 12 und 13 ist in Abwandlung zum ersten Ausführungsbeispiel nach den Fig. 3 bis 5 dargestellt, dass die mit einer schneidfähigen Profilflanken-Schneide versehene Seitenfläche der jeweiligen Räumzähne 21g, 21h nur über die Tiefe einiger weniger Profilsteigungen a mit einer Teil-Profilflanken-Schneide 32g, 32h versehen ist. Dahinter sind die Seitenflächen als freigelegte Flächen 33g, 33h ausgebildet, d.h. sie sind gegenüber den an sich zu erzeugenden Soll-Profilflanken 16 freigelegt; sie kommen also nicht in Eingriff mit dem Werkstück 8. In den Fig. 14 bis 15 ist dies für den Fall dargestellt, dass auch die Profilflanke 16 beim Räumen mit den Räumzähnen 21 endgültig geräumt wird, dass also kein Kalibrier-Räumen mehr notwendig ist. Demgegenüber wird bei dem Ausführungsbeispiel nach den Fig. 12, 13 die Profilflanke 16 erst endgültig durch Kalibrier-Räumen hergestellt. Durch das Freilegen wird - gleichermaßen wie durch den Freischliff- die Gefahr des Klemmens reduziert.

## Patentansprüche

1. Innen-Räumwerkzeug zum Innen-Räumen von jeweils durch einen Profilgrund (14) und Profilflanken (15, 16) begrenzten Profilen (12) von Innenverzahnungen eines Werkstückes (8),
- das einen Schaft (1) aufweist, der in einer Räumrichtung (22) voreilend ist, und
- das einen Zahnungsteil (2) mit mehreren entgegen der Räumrichtung (22) hintereinander angeordneten Reihen (6) von Räumzähnen (21a bis 21 f) aufweist,
- - wobei jeweils hintereinander angeordnete Räumzähne (21a bis 21f) zum Räumen eines Profils (12) mit einer Profiltiefe einander zugeordnet sind,
- - wobei die Räumzähne (21a bis 21f) Profilgrund-Schneiden (23a bis 23f) und erste und eine zweite Seitenflächen aufweisen,
- - wobei die Profilgrund-Schneiden (23a bis 23f) hintereinander angeordneter und einander zugeordneter Räumzähne (21a bis 21f) eine Profilsteigung (a) gegenüber den in Räumrichtung (22) jeweils voreilenden Räumzähnen (2 1 a bis 21f) aufweisen,
- - wobei den Profilgrund-Schneiden (23a bis 23f) jeweils eine Profilgrund-Schneiden-Freifläche (24) zugeordnet ist und
- - wobei die ersten und zweiten Seitenflächen die Profilgrund-Schneiden-Freiflächen (24) unter Bildung von ersten und zweiten Kanten durchdringen,
**dadurch gekennzeichnet,**
**dass** die ersten Seitenflächen als Führungs-Flanken (25a bis 25f) ohne Freiwinkel und ohne Freilage ausgebildet sind, so dass die ersten Kanten als nichtschneidfähige, über der Profilsteigung (a) zu schneidende Späne (29) und damit die Profilflanken (15) formende Führungs-Kanten (26) ausgebildet sind, und
**dass** die zweiten Seitenflächen zumindest benachbart zu den Profilgrund-Schneiden (23a bis 23f) als Profilflanken-Schneiden-Freiflächen (28a bis 28f) ausgebildet sind, wobei die zweiten Kanten zugeordnet zu den Profilgrund-Schneiden (23a bis 23f) als schneidfähige Profilflanken-Schneiden (27a bis 27f) ausgebildet sind.

2. Innen-Räumwerkzeug nach Anspruch 1,**dadurch gekennzeichnet, dass** ein sich über mindestens fünf Profilsteigungen erstreckender Teil der Profilflanken-Schneiden hintereinander angeordneter und einander zugeordneter Räumzähne (21g, 21h) als sich an die Profilgrund-Schneiden (23g, 23h) anschließende Teil-Profilflanken-Schneiden (32g, 32h) ausgebildet ist und
**dass** die Seitenflächen der Räumzähne (21g, 21h) anschließend an die Teil-Profilflanken-Schneiden (32g, 32h) als freigelegte Flächen (33g, 33h) ausgebildet sind.

3. Innen-Räumwerkzeug nach Anspruch 1 oder 2, **dadurch gekennzeichnet,**
**dass** die Führungs-Kanten (26) aufeinanderfolgender Räumzähne (21a bis 21 f) keine Profilflankensteigung aufweisen.

4. Innen-Räumwerkzeug nach einem der Ansprüche 1 bis 3, **dadurch gekennzeichnet,**
**dass** die Profilflanken-Schneiden (27a bis 27f) aufeinanderfolgender Räumzähne (21a bis 21 f) eine negative Profilflankensteigung b aufweisen.

5. Innen-Räumwerkzeug nach Anspruch 4, **dadurch gekennzeichnet, dass** für die negative Profilflankensteigung b gilt:
-2 µm ≤ b < 0.

6. Innen-Räumwerkzeug nach einem der Ansprüche 1 bis 3, **dadurch gekennzeichnet,**
**dass** die Profilflanken-Schneiden (27'a bis 27'f) aufeinanderfolgender Räumzähne (21a bis 21 f) keine Profilflankensteigung aufweisen.

7. Innen-Räumwerkzeug nach einem der Ansprüche 1 bis 3, **dadurch gekennzeichnet,**
**dass** die Profilflanken-Schneiden (27"a bis 27'f) aufeinanderfolgender Räumzähne (21a bis 21 f) eine positive Profilflankensteigung b" aufweisen.

8. Innen-Räumwerkzeug nach Anspruch 7, **dadurch gekennzeichnet, dass** für die positive Profilflankensteigung b" gilt:
2 µm ≥ b > 0.

9. Innen-Räumwerkzeug nach einen der Ansprüche 1 bis 8, **dadurch gekennzeichnet,**
**dass** der Zahnungsteil (2) mit Kalibrier-Räumzähnen (30a bis 30d) versehen ist, die nur auf der den zweiten Kanten zugeordneten Seite kalibrierschneidend ausgebildet sind.

## Claims

1. An internal broach for internally broaching profiles (12), each defined by a bottom (14) and flanks (15, 16), of female serrations of a work piece (8), which broach comprises
- a shank (1), which leads in a direction of broaching (22); and
- a toothed section (2) with several rows (6) of broach cutting teeth (21 a to 21f), the rows (6) being disposed successively counter to the direction of broaching (22);
-- wherein successive broach cutting teeth (21a to 21 f) are allocated to each other for broaching a profile (12) of a depth;
-- wherein the broach cutting teeth (21a to 21f) have bottom cutting blades (23a to 23f) and first and second sides;
-- wherein the bottom cutting blades (23a to 231) of successive and associated broach cutting teeth (21a to 21f) have a pitch (a) relative to the broach cutting teeth (21a to 21f) which lead in the direction of broaching (22);
-- wherein a respective bottom-cutting-blade relief surface (24) is allocated to the bottom cutting blades (23a to 23f); and
-- wherein the first and second sides pass through the bottom-cutting-blade relief surfaces (24), forming first and second edges;
**characterized**
**in that** the first sides are guide flanks (25a to 25f) without any relief angle and relief, so that the first edges are guide edges (26) without cutting ability which form chips (29) to be cut via the pitch (a) and thus the flanks (15); and
**in that** the second sides, at least in proximity to the bottom cutting blades (23a to 23f), are flank-cutting-blade relief surfaces (28a to 28f), the second edges, by allocation to the bottom cutting blades (23a to 23f), being flank cutting blades (27a to 27f) with cutting ability.

2. An internal broach according to claim 1, **characterized**
**in that** a part, extending over at least five pitches, of the flank cutting blades of successive and associated broach cutting teeth (21 g, 21 h) is designed as partial flank cutting blades (32g, 32h) subsequent to the bottom cutting blades (23g, 23h); and
**in that** the sides, subsequent to the partial flank cutting blades (32g, 32h), of the broach cutting teeth (21g, 21h) are relieved surfaces (33g, 33h).

3. An internal broach according to any of claims 1 or 2, **characterized**
**in that** the guide edges (26) of successive broach cutting teeth (21a to 21f) have no flank pitch.

4. An internal broach according to any of claims 1 to 3, **characterized**
**in that** the flank cutting blades (27a to 27f) of successive broach cutting teeth (21a to 21 f) have a negative flank pitch b.

5. An internal broach according to claim 4, **characterized**
**in that** -2 µm ≤ b < 0 applies to the negative flank pitch b.

6. An internal broach according to any of claims 1 to 3, **characterized**
**in that** the flank cutting blades (27'a to 27'f) of successive broach cutting teeth (21a to 21f) do not have a flank pitch.

7. An internal broach according to any of claims 1 to 3, **characterized**
**in that** the flank cutting blades (27"a to 27"f) of successive broach cutting teeth (21a to 21 f) have a positive flank pitch b".

8. An internal broach according to claim 7, **characterized**
**in that** 2 µm ≥ b > 0 applies to the positive flank pitch b".

9. An internal broach according to any of claims 1 to 8, **characterized**
**in that** the toothed section (2) is equipped with sizing teeth (30a to 30d) which are designed for sizing only on the side allocated to the second edges.

## Revendications

1. Outil de brochage interne pour le brochage interne de profils (12) de dentures intérieures d'une pièce à brocher (8), délimités respectivement par un fond de profil (14) et des flancs de profil (15, 16)
- qui présente une tige (1) avancée dans un sens de brochage (22) et
- qui présente une pièce de denture (2) avec plusieurs rangées (6) de dents de brochage (21a à 21f) disposées les unes derrière les autres en sens inverse du sens de brochage (22) ;
sachant que des dents de brochage (21a à 21f) disposées respectivement les unes derrière les autres sont ajoutées pour le brochage d'un profil (12) avec une profondeur de profil,
sachant que les dents de brochage (21a à 21f) présentent des découpes de fond de profil (23a à 23f) ainsi qu'une première et une deuxième surface latérale,
sachant que les découpes de fond de profil (23a à 23f) des dents de brochage disposées les unes derrière les autres et ajoutées les unes aux autres (21a à 21f) présentent une inclinaison de profil (a) par rapport aux dents de brochage avancées respectivement (21a à 21f) dans le sens de brochage (22),
sachant qu'une face de dépouille de découpe de fond de profil (24) est ajoutée respectivement aux découpes de fond de profil (23a à 23f) et
sachant que les premières et deuxièmes faces latérales pénètrent dans les faces de dépouilles de découpe de fond de profil (24) lors de la formation des premiers et des deuxièmes bords,
**caractérisé en ce que**,
les premières faces latérales sont configurées comme des flancs de guidage (25a à 25f) sans angle ni position de dépouille, de sorte que les premiers bords sont configurés comme des copeaux (29) non tranchants devant être coupés au-delà de l'inclinaison du profil (a) et avec cela les bords de guidage (26) formant des flancs de profil (15), et
les deuxièmes faces latérales sont configurées au moins adjacentes aux découpes de fond de profil (23a à 23f) comme des faces de dépouille de coupe de flanc de profil (28a à 28f), sachant que les deuxièmes bords sont configurés ajoutés aux découpes de fond de profil (23a à 23f) comme des découpes de flanc de profil tranchantes (27a à 27f).

2. Outil de brochage interne selon la revendication 1, **caractérisé en ce qu'**une pièce des coupes de flanc de profil s'étendant sur au moins cinq inclinaisons de profil de dents de brochage disposées les unes derrière les autres et ajoutées les unes aux autres (21g, 21h) est configurée comme découpe partielle de bords de profil (32g, 32h) se raccordant aux découpes de fond de profil (23g, 23h) et **en ce que** les faces latérales des dents de brochage (21g, 21h) sont configurées se raccordant aux découpes partielles de flancs de profil (32g, 32h) comme des surfaces dégagées (33g, 33h).

3. Outil de brochage interne selon la revendication 1 ou 2, **caractérisé en ce que** les bords de guidage (26) des dents de brochage successives (21a à 21f) ne présentent aucune inclinaison de flancs de profil.

4. Outil de brochage interne selon l'une des revendications 1 à 3, **caractérisé en ce que** les découpes de flancs de profil (27a à 27f) des dents de brochage successives (21a à 21f) présentent une inclinaison b négative de flancs de profil.

5. Outil de brochage interne selon la revendication 4, **caractérisé en ce que** pour l'inclinaison négative des flancs de profil "b" correspond à : -2µm ≤ b < 0

6. Outil de brochage interne selon l'une des revendications 1 à 3, **caractérisé en ce que** les découpes de flancs de profil (27'a à 27'f) des dents de brochage successives (21a à 21f) ne présentent aucune inclinaison de flancs de profil.

7. Outil de brochage interne selon l'une des revendications 1 à 3, **caractérisé en ce que** les découpes de flancs de profil (27"a à 27'f) des dents de brochage successives (21a à 21f) présentent une inclinaison positive de flancs de profil b".

8. Outil de brochage interne selon la revendication 7, **caractérisé en ce que** pour l'inclinaison positive des flancs de profil b" correspond à : 2µm ≥ b > 0

9. Outil de brochage interne selon l'une des revendications 1 à 8, **caractérisé en ce que** la pièce de denture (2) est prévue avec des dents de calibrage de broche (30a à 30d), configurées par découpe et calibrage seulement du côté ajouté aux deux bords.
